# EUROPEAN PATENT SPECIFICATION

(11) **EP 0 417 352 B1**
(45) Date of publication and mention of the grant of the patent: **16.03.1994**
(21) Application number: 89122332.3
(22) Date of filing: 04.12.1989
(51) Int. Cl.: A47G 27/04, F16G 11/00

(54) **Carpet stretching apparatus and method for stretching carpet**
Gerät und Verfahren zum Teppichspannen
Appareil et procédé pour tendre une moquette

(30) Priority: 24.08.1989 JP 217817/89
(43) Date of publication of application: 20.03.1991
(73) Proprietor: Matsushita, Katsumi, Osaka (JP)
(72) Inventor: Matsushita, Katsumi, Osaka (JP)
(74) Representative: Strehl Schübel-Hopf Groening & Partner

(56) References cited:
- GB-A- 453 621
- US-A- 1 989 020
- US-A- 3 003 466
- US-A- 3 178 155
- US-A- 3 245 649
- US-A- 3 482 817
- US-A- 4 669 618

## Description

### BACKGROUND OF THE INVENTION

The present invention relates to a carpet stretching apparatus, that is, an apparatus for stretching a carpet when the carpet is put down on a floor of a room, a hall,a corridor and the like, a securing member for a free end of a line member for traction used for stretching the carpet and a method for stretching the carpet.

A carpet stretching apparatus according to the preamble of claim 1 is disclosed in utility model publication 63-194679, the apparatus comprising:
① a base;
② a plurality of pins projecting downward from a lower surface of said base;
③ a drum rotatably attached to and above said base;
④ a line member for traction having one end fixed to said drum and the other free end;
⑤ an operating member rotating said drum only in a direction winding up said line member for traction and preventing it from rotating in an opposite direction; and
⑥ a reversal preventing member allowing said drum to rotate only in a direction winding up said line member for traction and preventing its reverse rotation due to tension of the line member for traction;
wherein this apparatus is put on a carpet having a starting side fixed to a floor on which the carpet is put down and said pins are stuck into the carpet to fix the apparatus to the carpet and said free end of said line member for traction is fixed to a position on the ending side of the carpet and thereafter, said drum is rotated through said operating member to roll up said line member for traction around the drum to pull the apparatus toward a position on the ending side of said carpet, whereby the carpet is stretched.

The conventional above mentioned carpet stretching apparatus is as follows. That is, a head having a number of pins provided on its lower surface is connected to a contacting member by an expansible connecting rod like member in the well-known stretching apparatus. The head is fixed to a place slightly spaced apart from a starting side of the carpet by the pins. At the same time, the contacting member abuts on a wall surface of the starting side of the carpet. In this state, when the connecting rod like member is extended, the carpet to which the head is fixed is pushed toward an ending side.

Thereby, a place near the starting side of the carpet can be stretched, but it is difficult to sufficiently stretch a long carpet with a length of several tens to one hundred meters over the whole length thereof.

Meanwhile, the known carpet stretching apparatus can stretch the carpet at a place near the ending side or the middle part thereof toward the ending side, whereby the carpet can be stretched over the whole length thereof.

When the carpet is stretched by the carpet stretching apparatus described above, if the carpet is not fully stretched by one stretching operation, it is necessary to roll back the line member for traction which was rolled up before, while to slightly bring the carpet stretching apparatus back to a place on the starting side of the carpet and at that place, to fix the stretching apparatus on the carpet again. In another case where the carpet stretching apparatus is used on one carpet and then used on another carpet, it is necessary to roll back the line member for traction once rolled. In this case, an operator has to hold the operating member in accordance with ⑤ and the reversal preventing member ⑥ at a certain position in such a manner that it may not act on the drum, while hold the free end of the line member for traction and draw the line member for traction each time by hand, which is troublesome.

This object is met by the invention as set out in claim 1.

In addition, there is also provided an advantageous method using the carpet stretching apparatus in accordance with the present invention for stretching a carpet by drawing an appropriate place of the carpet toward an ending side of the carpet.

### SUMMARY OF THE INVENTION

The apparatus according to the invention is used in such a manner that it is put on a carpet with its starting side fixed to a floor on which the carpet is to be spread, the pins are stuck into the carpet to fix the apparatus to the carpet. At the same time, the first end of the line member for traction is fixed to a position on an ending side of the carpet on the floor. Thereafter, the switching means of the lever for operation is brought to its first switch position and the lever is reciprocally rotated to draw the first end of said line member for traction toward the apparatus, whereby the apparatus is drawn toward the ending side of the carpet to extend the carpet. When the chain is returned to original place, the switching means of the lever for operation is brought to the second switch position and the lever is reciprocally rotated, whereby the first end of the line member for traction is drawn out of the apparatus in the forward direction.

In this way, it is possible to move the line member for traction in two opposite directions by reciprocally rotating the lever in the first switch position and also reciprocally rotating the lever in the second switch position, so that operation of stretching a carpet using this apparatus and operation of returning the line member for traction to an original position can be performed only by operation of the lever. Therefore, the apparatus in accordance with the present invention is improved more than that disclosed in the Japanese Utility Model publication 63-194679

The present invention is advantageously implemented in such a manner that a link chain is used as the line member for traction and a recession is used as the holding means for the chain, which recession has a configuration capable of accepting adjacent links crossed at right angles and is formed on a periphery of the drum.

The link of the chain fits in the recession and is surely held by that. Therefore, the chain and the apparatus can be reliably moved and advanced, respectively. (claim 2)
The securing member invented by the inventor, for fixing the free end of the line member for traction used for stretching a carpet comprises a substrate having vertical through holes into which pin means are inserted, an arm provided in a plain surface parallel with the substrate so as to be able to rotate around a point on the substrate and an engaged member provided at an end of the arm.

This securing member is used as follows. That is, the securing member is put at an end of the floor on which the carpet is to be put down on the ending side of the carpet and pin means is passed through a through hole in the securing member and a hole formed or to be formed in the floor to fix the securing member on the floor. Then, an engaged member of the securing member is engaged with the free end of the line member for traction extending from the carpet stretching apparatus fixed to the carpet.

Therefore, it is possible to easily fix the securing member to the floor and to draw the arm and the line member for traction together in a straight line by turning the arm toward the apparatus even if the apparatus is positioned in any direction. (claim 3)
In this securing member, it is advantageous to spread a plurality of through holes on the substrate, because a tractive force by the line member for traction can be dispersed when a plurality of pin means are inserted into a plurality of holes, which is preferable as far as safety is concerned. In addition, in order to uniformly receive the tractive force by the line member for traction, a preferable hole is selected and a pin is inserted into that hole. (claim 4)
In addition, a plurality of through holes having at least two kinds of diameters can be provided in the securing member. In this case, when the floor is made of concrete, larger diameter holes are formed in the floor and larger diameter pins are inserted into the larger diameter holes of the securing member and the holes in the floor, whereby the securing member can be stably fixed to the floor. When the floor is made of wood, wooden screws are inserted into relatively many smaller diameter holes in the securing member and these wooden screws are screwed into the floor, whereby the securing member can be also stably fixed to the floor. (claim 5)
In addition, in this securing member, the arm comprises a first arm part capable of rotating around a point of the substrate in a plain surface parallel with the substrate and a second arm part capable of rotating around a point on the free end of the first arm part, in which the engaged member may be provided on the end of the second arm part. When the securing member is drawn by the line member for traction of the carpet stretching apparatus, the securing member is drawn a little upward. If the arm is constituted as described above, an upward force acting on the securing member can be absorbed by an upward rotation of the second arm part. Therefore, even if the securing member is drawn strongly by the line member for traction, it is possible to prevent the place from being damaged because moment is applied to the base of the arm. (claim 6)
In addition, in the securing member described above, another engaged member can be additionally provided on one side or both sides of the arm, whereby, a plurality of line members for traction of the carpet stretching apparatuses can be fixed by one securing member. Especially, when another stretching apparatus is arranged on one side of the stretching apparatus and both are connected to one securing member, the line member for traction of the first stretching apparatus is connected to an engaged member of the end of the arm and the line member for traction of the second stretching apparatus is connected to the engaged member on the side of the arm. (claim 7)
A method for stretching a carpet comprising the steps of;
I. fixing first and second gripper means to places on a floor on which the carpet is put down corresponding to starting and ending sides of the carpet , respectively;
II fixing the starting side of the carpet to the first gripper means and then bringing the ending side of the carpet near the second gripper means after the carpet is put down;
III putting two carpet stretching apparatuses having many pins projecting downward from lower surfaces of substrates and means for drawing free ends of line members for traction above the substrate, on two places spaced apart in a width direction of the carpet to fix them to the carpet through the pins.
IV fixing two securing member to two places spaced larger than a distance between two carpet stretching apparatuses in the step III in a width direction of the carpet on the floor just before the second gripper, before or after said steps II and III, during these steps or at the same time of both or one of these steps;
V attaching the free end of the line member for traction of the carpet stretching apparatus to the securing member; and
VI. drawing the free end of the line member for traction toward the carpet stretching apparatus by operating the carpet stretching apparatus.

As described above, since two carpets stretching apparatuses spaced apart in a width direction of a carpet are fixed to the carpet and two securing member spaced larger than a distance between the apparatuses are arranged, two places on which two stretching apparatuses are arranged are pulled forward and outward. Therefore, slack is not generated at the center of the carpet. (claim 8)
According to the method for stretching the carpet as described above, since at least one other similar carpet stretching apparatus is arranged at at least one side of two carpet stretching apparatuses, the end of its line member for traction can be engaged with one of two securing member. Thus, even if there is slack partially on the carpet, it can be removed. (claim 9)
In addition, according to the method for stretching a carpet described above, at least one other similar carpet stretching apparatus may be arranged in the rear of that two carpet stretching apparatuses, that is, on a starting side of the carpet and its free end of the line member for traction may be engaged with the securing member. Thus, even if there is slack partially in the rear of the carpet, it can be easily removed. (claim 10).

Furthermore, according to the method for stretching a carpet described above, at least one other similar carpet stretching apparatus is arranged in the rear of that two carpet stretching apparatuses, that is, on the starting side of the carpet and this carpet stretching apparatus may be connected one of said two carpet stretching apparatuses by another line member for traction. Thus, the place on the carpet between the carpet stretching apparatuses mounted before and behind can be uniformly stretched forward. (claim 11)
In addition, according to the method for stretching a carpet, when adjacent two patterns on carpets do not match, one place on the carpet where the patterns do not match is stretched forward using a third stretching apparatus and then the pattern on one place on the carpet can be matched with the other pattern. (claim 12)
The apparatus, the securing member and the method in accordance with the present invention can be implemented if one is used without another.

Although reference numeral correspondingly alloted to each of components in the drawings is shown in claims of this application, this is just for easily understanding the invention and for illustration only, so that it does not means that this is limited to that shown.

### BRIEF DESCRIPTION OF THE DRAWINGS

Fig 1 is a perspective view showing a carpet stretching apparatus in accordance with one embodiment of the present invention,
Fig. 2 is a perspective view showing an example of a securing member for a line member for traction which is used with the carpet stretching apparatus of the present invention, in which a left end of this figure should be connected to a right end of the previous figure through an partially omitted chain,
Fig. 3 is a side view showing the apparatus shown in Fig. 1,
Fig. 4 is a side view showing the apparatus shown in Fig. 2,
Fig. 5 is a schematic plan view showing preparation when a carpet is spread by a method in accordance with the present invention,
Fig. 6 is a perspective plan view showing a method for stretching the carpet in accordance with the present invention,
Fig. 7 is a perspective side view showing the line member for traction in its tense state just before the carpet is stretched using a carpet stretching apparatus of the present invention,
Fig. 8 is the same view as in Fig. 7 after the carpet is stretched once,
Fig. 9 is a transverse sectional view showing a finished end part of the carpet after the carpet is stretched,
Fig. 10 is a vertical sectional view showing an operation part of the carpet stretching apparatus in accordance with the present invention,
Fig. 11 is an exploded perspective view of Fig. 10 with two mounting plates omitted,
Fig. 12 is a perspective view showing a state in which members shown in Fig. 11 are assembled without a lever,
Fig. 13 is a front view showing a drum,
Fig. 14 is a sectional view taken along a line XVI - XVI in Fig. 13,
Fig. 15 is a front view showing a drum rotated 60° from the state in Fig. 13,
Fig. 16 is a sectional view taken along a line XVI - XVI in Fig. 15,
Fig. 17 is a transverse sectional view showing a drum,
Fig. 18 is a sectional view showing a base of the lever in which a switch is at a first switch position so as to be able to draw the line member for traction toward the apparatus and the lever is at a middle stage in the course of operating rotation in a clockwise direction for drawing the line member for traction,
Fig. 19 is a sectional view showing the base of the lever in which a switch is at a first switch position so as to be able to draw the line member for traction toward the apparatus and the lever is at a final stage in the course of operating rotation in a clockwise direction for drawing the line member for traction,
Fig. 20 is a sectional view showing the base of the lever in which a switch is at a first switch position so as to be able to draw the line member for traction toward the apparatus and the lever is at a final stage in the course of idle rotation in a counterclockwise direction for returning to an initial position,
Fig. 21 is a sectional view showing the base of the lever in which a switch is at a second switch position so as to be able to draw the line member for traction out forward from the apparatus and lever is at a final stage in the course of idle rotation in a clockwise direction,
Fig. 22 is a sectional view showing the base of the lever in which a switch is at a second switch position so as to be able to draw the line member for traction out forward from the apparatus and lever is at a final stage in the course of operating rotation in a counterclockwise direction for actually drawing out the line member for traction,
Fig. 23 is the same view as in Fig. 6 showing another example of a carpet stretching method in accordance with the present invention,
Fig. 24 is the same view as in Fig. 6 showing a further example of a carpet stretching method in accordance with the present invention,
Fig. 25 is the same view as in Fig. 6 showing still another example of a carpet stretching method in accordance with the present invention, and

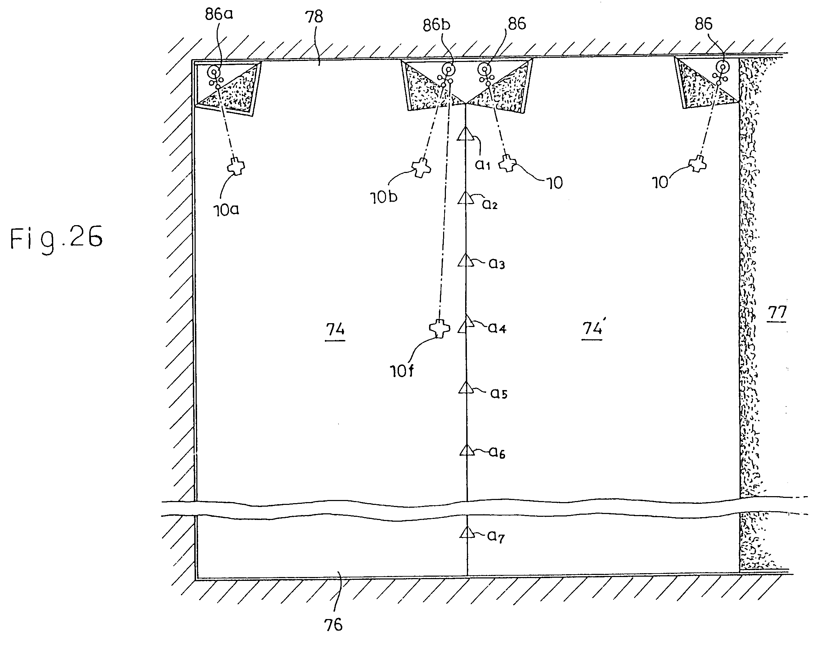

Fig. 26 is a schematic plan view showing a still further example of a carpet stretching method in accordance with the present invention.

### DETAILED DESCRIPTION OF THE PREFERRED EMBODIMENTS

### Outline of Carpet Stretching Apparatus and Method for Using the Same

Reference numeral 10 designates a carpet stretching apparatus in accordance with the present invention. The apparatus 10 comprises a base 12 of a flat plate. The base 12 has a front part 14 with a narrow width and a wing-shaped rear part extending in a width direction. A plurality of pins 18 project downward over the whole lower surface of the base 12.

The pin 18 has a sharp end tilting forward.
Therefore, the pin 18 can easily bite the carpet to be put down and when the apparatus is drawn forward, it can effectively draw the carpet forward. The pins 18 are uniformly provided over the whole surface of the base 12. Therefore, a force by which the apparatus 10 holds the carpet does not converge on a part of the apparatus. Therefore, when the apparatus 10 is drawn forward, the carpet is not partially damaged by the pin 18.

If the carpet is thick, the pin 18 has to deeply bite the carpet. When the carpet is thin, only a tip of the pin 18 is to bite it. Therefore, a thickness of the carpet bitten by the pin 18 has to be adjusted in accordance with the thickness of the carpet.

This adjustment is made by a pair of forward rollers 20 and 20 and a pair of rear legs 22 and 22.

The rollers 20 and 20 are rotatably mounted through a shaft 25 penetrating a lower ends of the both legs of a U-shaped supporting member 24. A U-shaped stay 28 stands on the front part 14 of the base 12 behind the supporting member 24. Upper ends of both legs of the supporting member 24 hinges on the stay 28. When the supporting member 24 is rotated forward, the roller 20 slightly rises and when the supporting member 24 is rotated backward, the roller 20 slightly falls. An adjustment screw 32 is screwed into a nut member 30 mounted on a horizontal member of the supporting member 24. Its end abuts on a lower surface of a part 34 projecting from the upper end of the stay 28. Therefore, rotation in the forward direction of the supporting member 24 is controlled. In addition, another nut member 26 is mounted on one leg of the supporting member 24 in a direction crossing it and an end of the adjustment screw 27 screwed into it abuts on an upper surface of the base 12. Therefore, rotation in the backward direction of the supporting member 24 is controlled. The supporting member 24 is fixed at a predetermined position by both adjustment screws 32 and 27.
The predetermined position of the supporting member 24 of the roller is adjusted by rotation of the adjustment screws 32 and 27. As a result, vertical position of the roller 20 can be adjusted.

The rear leg 22 has a stay 38 extending in a backward direction from the base 12. Cylindrical bodies 40 and 42 are provided upper and lower parts of an end of the stay 38. A screw bar 44 loosely fits in the cylindrical bodies.
A seat 46 is attached on a lower end of the screw bar 44. A dial 48 is provided between the cylindrical bodies 40 and 42 and the dial 48 and the screw bar 44 are screwed. The seat 46 vertical moves by rotation of the dial.

The roller adjusts a height and also functions as follows. When the apparatus 10 is drawn forward by a method to be described below, the front part 14 of the apparatus 10 strongly pushes the carpet and the rear part thereof is slightly lifted from the carpet. At this time, the apparatus 10 is moved forward by the roller 20, so that damage which would have been caused by the front end of the apparatus 10 without the roller 20 can be prevented. In addition, although slack of the carpet is generated in front of the apparatus 10 because the apparatus 10 is drawn forward, the roller 20 effectively moves this slack forward and finally drives out near the end of the carpet.

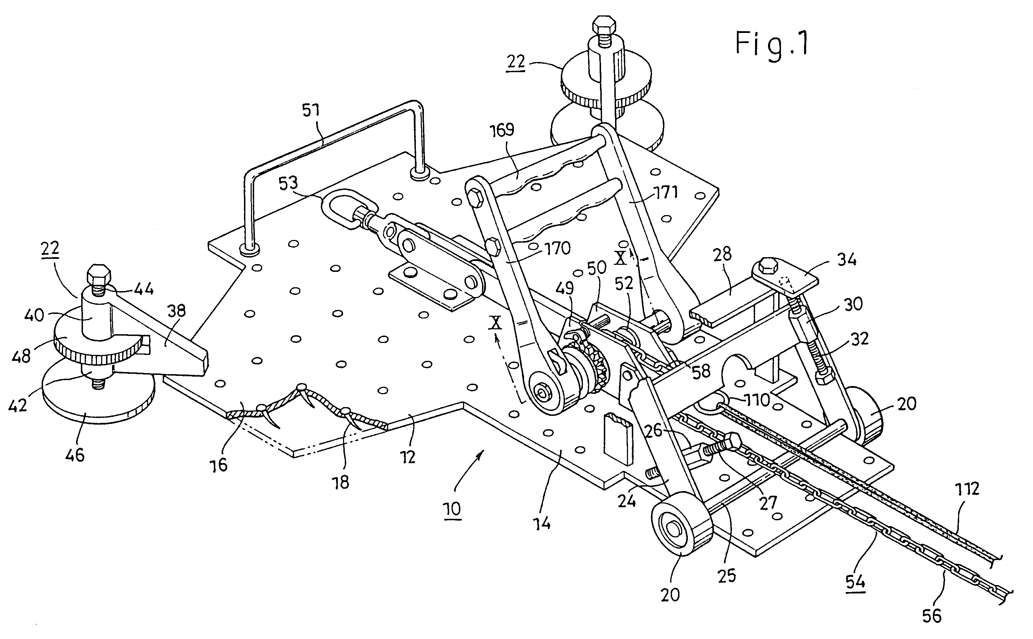

Two mounting plates 49 and 50 extending in a longitudinal direction stand about the middle of the base 12 in a longitudinal direction. A drum 52 is rotatably supported by the mounting plates 48 and 50. A middle part of a link chain 54 is rolled round a peripheral surface of the drum 52. The link chain 54 serves as a line member for traction of the apparatus 10. As clearly seen in Fig. 1, two upper and lower parts of the link chain 54 divided by the drum 52 are drawn in a forward direction from the apparatus 10. The drum 52 is selectively rotated in two directions by a lever 170 for operation as described below. As a result, two parts 56 and 58 of the link chain 54 are selectively drawn toward the apparatus 10 or pushed out in the forward direction.

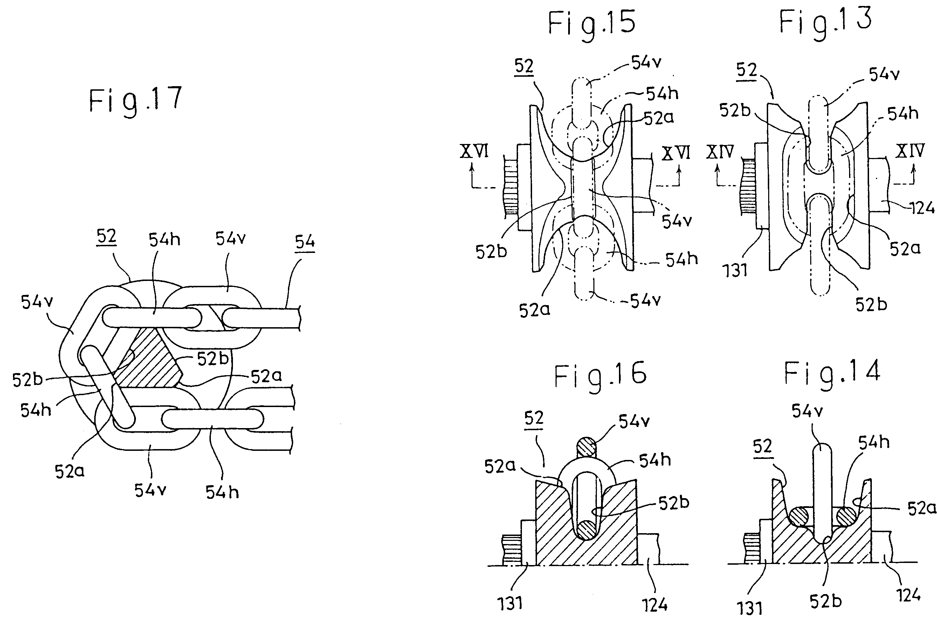

As shown in Figs. 13 through 17, the drum 52 has three elliptical recessions 52a arranged in a circumferential direction on its periphery surface. A U-shaped trench 52b extending in an inward direction of a diameter is formed between the adjacent recessions 52a.

The link chain 54 has a link 54h which is horizontal, that is, parallel with a peripheral surface of the drum 52 and a link 54v which is vertical, that is, extending in a direction of a diameter of the drum 52 which are alternately connected. The horizontal link 54h fits on the elliptical recession 52a of the drum 52 and the vertical link 54v fits on the U-shaped trench 52b. Especially, when the link 54h fits in the recession 52a, the chain 54 is held by the drum 52 in a longitudinal direction. More specifically, the chain 54 does not relatively slide with the drum 52 so that motion can be perfectly transferred. More specifically, in two parts 56 and 58 of the chain 54, one is surely drawn toward the drum 52 and the other is surely drawn out of the drum 52 by rotation of the drum. Another holding means instead of recessions on a periphery surface of the drum may be used and another body such as a toothed belt may be used instead of the chain.

Reference numeral 51 designates a handle to carry.

### Preparation to Put Down Carpet

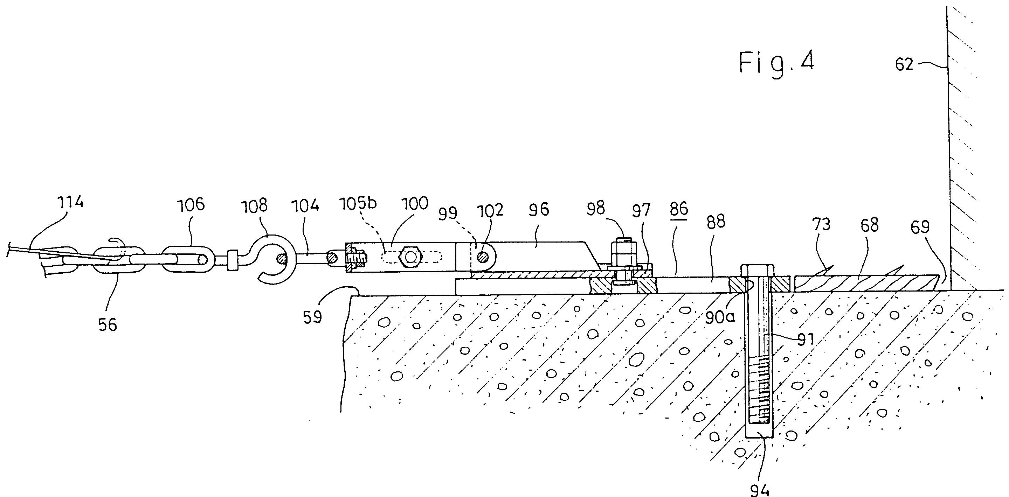

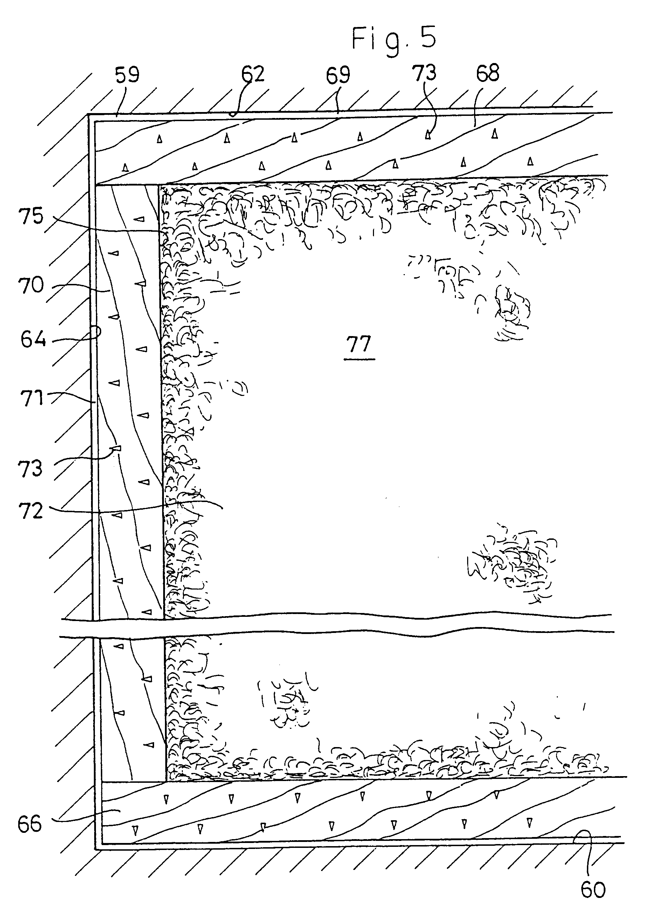

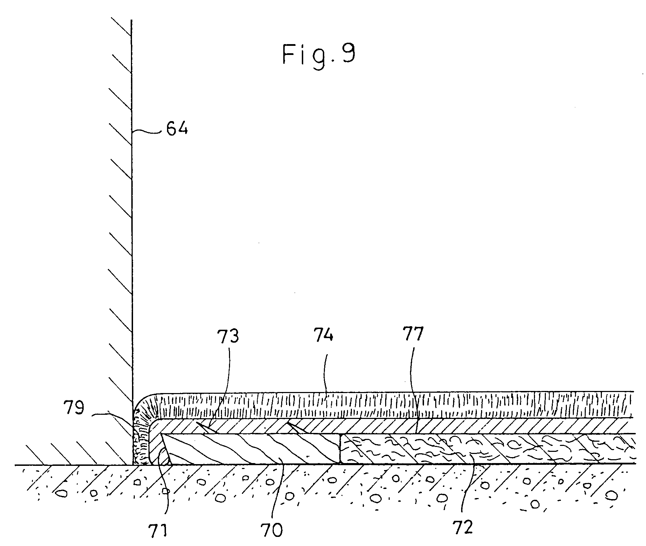

When the carpet is spread using this apparatus 10, preparation shown in Fig. 5 is made. That is, gripper 66, 68 and 70 are fixed on a floor 59 along a wall surface 60 on a starting side from which the carpet is spread, a wall surface 62 on an ending side 62 and a wall surface 64 in a longitudinal direction, respectively. At this time, gaps 67, 69 and 71 slightly narrower than that a thickness of the carpet are provided between the grippers 66, 68 and 70 and the wall surfaces 60, 62 and 64, respectively. The grippers 66, 68 and 70 have nails, needles, pins or the like attached on an upper surface of long wood having a rectangular cross section and those ends point upward and outward. A felt 72 or the like is laid at a place 75 surrounded by the grippers 66, 68 and 70 on the floor. As a result, there is provided a surface 77 for the carpet to be put down which an upper surface of the felt 72 and an upper surface of the grippers 66, 68 and 70 have the same height. In addition, as can be seen in Figs. 4 and 9, the end of the gripper on the wall side inclines downward , that is, a distance between the gripper and the wall surface is larger at the bottom.

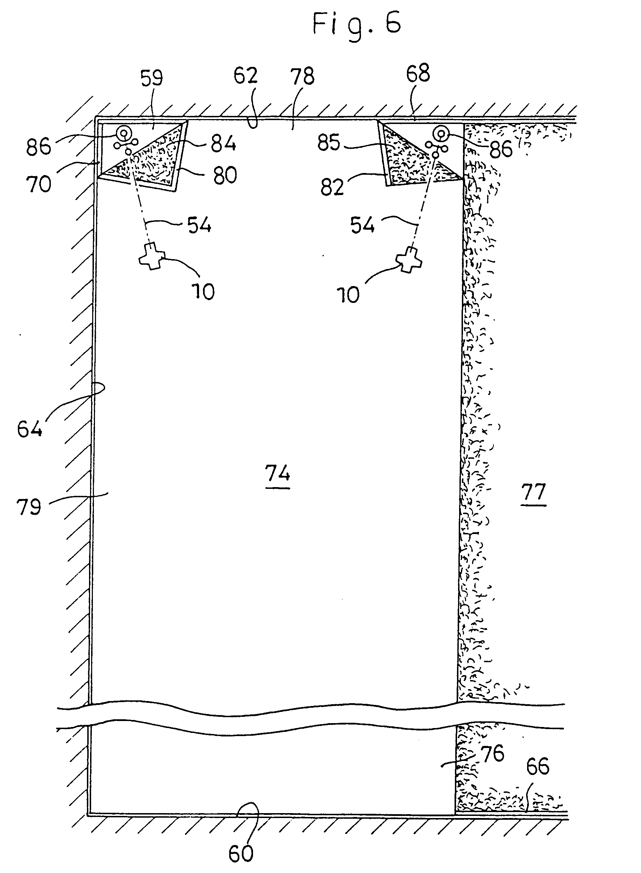

As shown in Fig. 6, when the carpet 74 is spread on the surface 77, the starting side 76 of the carpet 74 is fixed to the gripper 66. At this time, the ending side 78 of the carpet 74 is near the wall surface 62 on the ending side. In this state, both shoulders 80 and 82 of the ending side 78 of the carpet and the corresponding both shoulders 84 and 85 of the felt 72 are folded upwardly. Then, triangle-shaped floor surfaces 59 and 59 are exposed at both shoulders 84 and 86 on the surface 77 on which the ending side of the carpet is to put down and two securing members 86 and 86 are set at those places.

### Securing Member and Attaching Method therefor

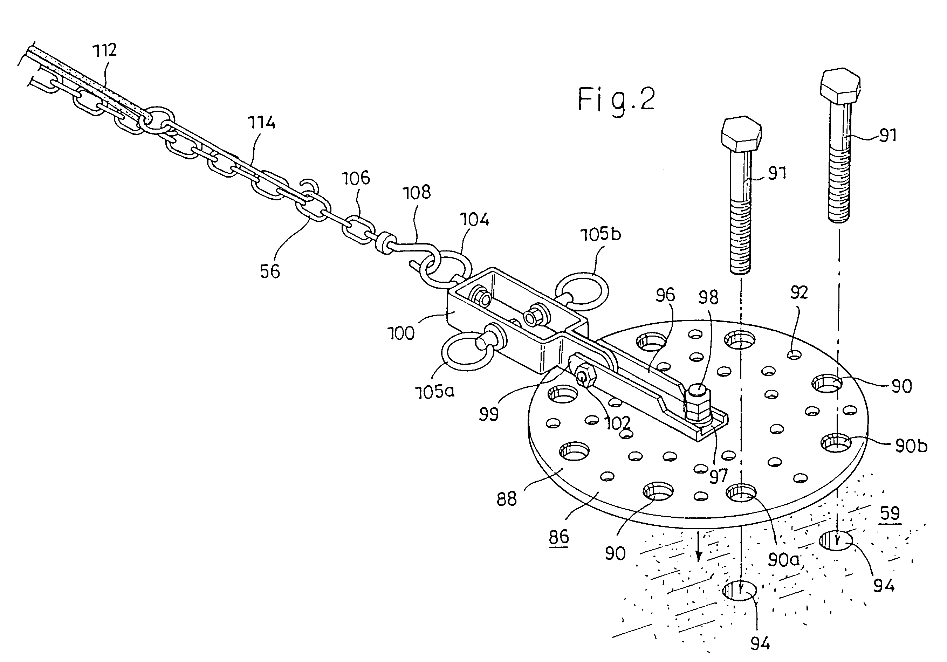

Fig. 2 shows a securing member 86 in detail. The securing member 86 is made of metal and has rigidity. The securing member 86 has a circular substrate 88. A plurality of through holes 90 having a relatively large diameter are provided at the same intervals in a circumferential direction near its peripheral edge of the substrate 88. Many through holes 92 having a relatively small diameter are uniformly spread between the adjacent through holes 90 and 90 and inside the through holes 90.

If the floor is made of concrete, a hole 90 having almost the same shape as that of the larger diameter through hole 90 is made in the floor when the securing member 86 is set on the floor 59 as described above. In this case, there are provided two holes 94 and 94 which correspond to two through holes 90a and 90b provided at symmetrical positions among the larger diameter through holes 90 in the securing member 86. Then, the securing member 86 is put of the floor and two bolts 91 and 91 having a diameter slightly smaller than that of the holes 90 and 94 are screwed into the holes 90a and 94, and 90b and 94, respectively. As described above, the securing member 86 is fixed on the floor.

When the floor is made of wood, a plurality of wooden screws (not shown) are screwed into the smaller diameter holes 92 provided at symmetrical positions.

An arm 96 is arranged on the substrate 88 of the securing member 86 attached on the floor 59. The arm 96 has one end 97 supported by a pin 98 provided at the center of the substrate 88 and it can rotate around this pin in a horizontal plain surface. A second arm 100 is connected to an outer end of the arm 96. The second arm 100 is provided so as to be able to rotate in a vertical plane in reference to the first arm through a pin 102 which is arranged in a horizontal direction. A ring 104 serving as an engaging member is provided at an end of the second arm 100.

Since a number of holes 90 and 92 are uniformly spread in the securing member 86, even if the securing member 86 is put on the floor in any position, it can be used almost as it is. More specifically, it is not necessary to largely rotate the securing member 86 after put on the floor in order to bring desired holes 90 and 92 to the hole 94 made on the floor. After the securing member 86 is fixed, it can be set in a desired direction by rotation of the arm. In addition, since bolts 91 and the like are screwed into the plurality of holes 90 and 92 on the securing member 86, a tensile load from the apparatus 10 can be dispersed, which is preferable in view of safety.

In addition, since the first and second arms 96 and 100 can relatively rotate in a vertical plane, the following merit can be obtained. That is, when the ends of the arms 96 and 100 are drawn by the apparatus 10 through a chain, the arms 96 and 100 are in contact with the floor surface, while there are felt 72, the carpet 74 and the base 12 of the apparatus 10 between the drum 52 of the apparatus 10 drawing the chain 54 and the floor. In addition, the drum 52 is slightly above the base 12. More specifically, there is a difference of 4 - 5 cm in height between the arms 96 and 100 and the drum 52. It means that the arm is diagonally pulled from the upper side.
Therefore, if the arms 96 and 100 are integrally provided, moment is generated with the base 97 as a supporting point and then, which often causes the pin 98 to be damaged. If the arms 96 and 100 can be relatively rotated as described above, even when the arms 96 and 100 are pulled from the above, the arm 100 can be rotated in an upper direction, so that such a tractive force can be absorbed.

### Method for Attaching Carpet Stretching Apparatus to Carpet and Connecting the Apparatus to Securing Member

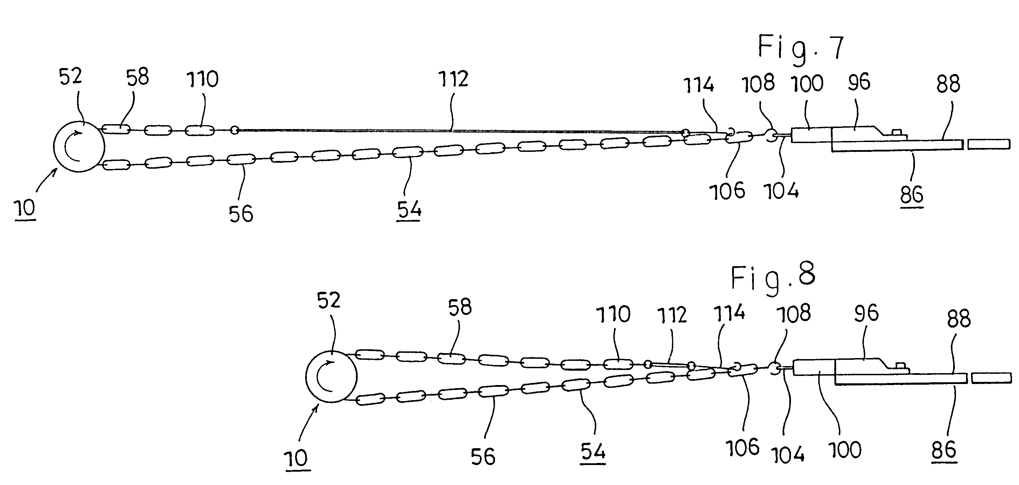

After the securing member 86 is fixed on the floor 59, as shown in Fig. 6, two apparatuses 10 and 10 are arranged on two places spaced apart in a width direction and fixed on the carpet 74 by pins 18 provided on their lower surfaces. In this state, as can be seen by a schematic view in Fig. 7, a lower part 56 of two parts 56 and 58 of the chain 54 extending forward from the apparatus 10 is fully drawn forward. Then, a hook 108 provided at an end 106 of the lower part 56 is engaged with the engaging member of the securing member 86. The upper part 58 of the chain 54 is fully drawn near the drum 52 of the apparatus 10. An elastic cord 112 is attached on an end 110 of the upper part 58. A hook 114 is attached on the other end of the elastic cord 112. The elastic cord is fully stretched and the hook 114 is engaged with a link near the end 106 of the lower part 56 of the chain 54. Thus, the upper part 58 of the chain 54 is drawn in a forward direction from the apparatus 10. Figs. 1 through 4 show the above-described state other than Fig. 7.

### Operation of Carpet Stretching Apparatus (to Stretch Carpet)

As described, above, the apparatus 10 is attached to the carpet 74 in such a manner that it can be drawn forward. Then, the drum 52 is rotated clockwise as shown in Figs. 1, 3, 7 and 8 by an operation lever 170 to be described below. Then, the lower part 56 of the chain 54 is pulled toward the apparatus 10 and at the same time, the upper part 58 is drawn out in the forward direction. If the drum 52 is still rotated even after the lower part 56 becomes tense, the apparatus is moved toward the securing member 86. Then, a part of the carpet 74 fixed by the apparatus 10 through the pin 18 is also drawn toward the wall surface 62 on the ending side. As a result, the carpet is stretched toward the ending side.

In general, a taffetized carpet should be stretched 1% and Wilton carpet should be stretched 0.3%. If they are not stretched to this degree by one operation, the drum 52 is reversely rotated to draw the upper part 58 of the chain toward the apparatus and draw out the lower part 56 in the forward direction, while the apparatus 10 is carried to the starting side of the carpet 74 and then the apparatus 10 is attached another place on the carpet 74. At this time, the chain is in a state shown in Fig. 7 again. Then, the apparatus is operated again so that the carpet 74 is further stretched.

In the course of stretching operation, when the apparatus 10 advances, the upper part 58 of the chain 54 is sequentially drawn out in the forward direction and its length is increased. As shown in Fig. 8, as a length of the upper part 58 is increased, the elastic cord 112 shrinks to absorb its increased length. Therefore, the upper part 58 of the chain 54 smoothly advances without any slack in front of the drum 52. However, even if there is not provided the elastic cord 112 at the upper part 58 of the chain 54 and the end 110 of the upper part 58 is freely left in front of the apparatus 10, the chain 54 could be moved, because as described above, means for holding the chain 54 is provided on a peripheral surface of the drum 52 so that this holds the chain and forcedly pushes it forward. The elastic cord 112 enables the chain to circulate more smoothly.

As described above, when the carpet is completely stretched, the apparatus 10, the securing member 86 and chain 54 are left as they are and the apparatus 10 is kept in a state fully pulled by the securing member 86. In this state, surplus part on the ending side 78 of the carpet generated by the stretching operation is cut and the ending side 78 is held by the gripper 68 on the ending side.
Then, an edge of the ending side 78 is pushed in the gap 69. After this operation, an end 79 in a longitudinal direction of the carpet 74 is held by the gripper 70 in a longitudinal direction shown in Fig.5 and its edge 83 is pushed in a gap 71 between the gripper 70 and a wall surface 64 in a longitudinal direction. Fig. 9 shows a state in which the ending side 79 of the carpet is pushed in the gap 71. Thus, the finishing of the carpet 74 is done while it is kept in a fully tense state by the apparatus 10, so that the carpet can be spread by one person.

As shown in Fig. 6, two apparatuses 10 and 10 are positioned slightly inside the place where two securing members 86 and 86 are attached. Therefore, the carpet 74 where the apparatuses 10 is put is pulled forward and outward (in a direction of a dashed line 54 showing a link chain for traction in Fig. 6). If the carpet 74 is pulled only forward, the center part of the carpet 74 in a width direction could rise. However, since two places on the carpet 74 are pulled forward and outward here as described above, that problem can be solved.

### Structure and Operation of Traction Mechanism

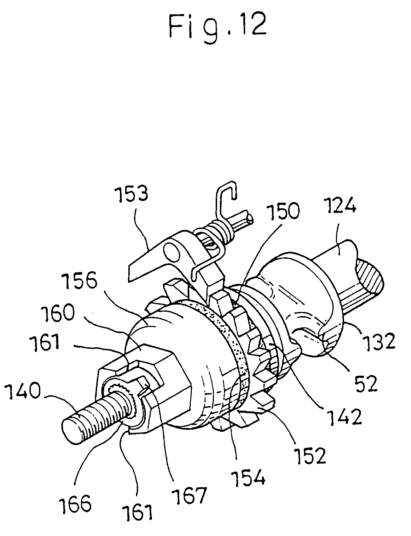

Referring to Figs. 1, 3 and 10 through 22, a description is given of a structure of a traction mechanism of the apparatus 10 and a method for operating it.

The drum 52 composes a part of the operation shaft 120. More specifically, a bar-shaped operation part 122 and also a bar-shaped holding part 124 extend from both sides of the drum 52. These three members 52, 122 and 124 are integrally formed.

The operation part 122 and the holding part 124 are inserted into through holes 126 and 128 formed in the mounting plates 49 and 50 standing on the base. In addition, both outer surfaces 130 and 132 of the drum 52 abut on opposed surfaces of the mounting plates 49 and 50, respectively. Thus, the operation shaft 120 is rotatably held by the apparatus 10 through the mounting plates 49 and 50.

Levers 170 and 171 are mounted on both ends of the operation shaft 120. As will be described below, the lever 170 is an operation lever and which is interlocked with the drum 52. On the other hand, the holding part 124 is only inserted into the lever 171 in such a manner that it can be relatively rotated. The levers 170 and 171 are connected by a handle 169 to hold.

A first spline 134, a male screw 136 for clutch operation, a second spline 138 and a female screw 140 for non-detachment are formed in this order from the base to a tip end on a periphery of the operation part 122. Diameters of these parts are gradually decreased.

A disc hub 142 fits on the spline 134 of the operation shaft 120. A spline 148 formed on an inner surface of a cylindrical hub part 146 of the disc hub 142 is engaged with the spline 134. A disc 144 of the disc hub 142 abuts on a projection 131 from an outer surface 130 of the drum 52. A ring-shaped lining 150 made of hard rubber, a ratchet wheel 152 and another lining 154 made of the same are loosely fitted to the hub part 146 and in contact with each other on the hub part 146 of the disc hub 142. When those are assembled, a left surface of the second lining 154 in the figure is almost the same height as that of an end surface of the hub part 146 of the disc hub 142.

Reference numeral 156 designates a clutching member. This comprises a bell-shaped base 158 and a pentagonal cylindrical part 160 extending therefrom. A hole 162 extends through the base 158 and the cylindrical part 160. A female screw 164 is formed on an inner surface of the hole. This female screw and the male screw 136 for clutching operation provided on the operation shaft 120 are screwed together. A free end surface of the base 158, that is, a right side surface in the figure is in contact with the second lining or detached from it by a method to be described below. Two notches 161 are provided at opposed places in the cylindrical part 160 in a shaft direction.

A cylindrical check washer 166 is arranged inside the cylindrical part 160 of the clutching member 156. The check washer 166 loosely fits to the cylindrical part 160 of the clutching member 156. However, a stopper 167 projects outward in a diameter direction from the check washer 166 and this stopper 167 is positioned inside the notch 161 of the clutching member 156, so that the check washer 166 is relatively rotated in reference to the clutching member 156 as much as the stopper 167 can move in a circumferential direction within the notch 161. In addition, a spline 168 is formed in an inner surface of the check washer 166 and the spline 168 is interlocked with the second spline 138 of the operation shaft 120, so that the check washer 166 can not be relatively rotated to the operation shaft 120.

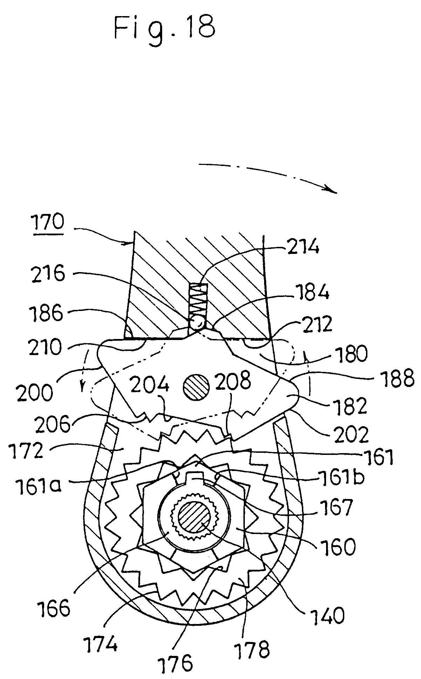

As can be seen in Figs. 18 through 22, the lever 170 for operation has a cylindrical recession 172 on its base which recession extending in the same direction as that of the rotation shaft. An operation cylinder 178 having splines 174 and 176 on its outer and inner surfaces, respectively is rotatably held inside the recession 172. Especially, the inner spline 176 is formed so as to be engaged with a hexagonal cylindrical part 160 of the clutching member 156.

A recession 180 for housing a switch is provided on a free end of the lever 170 next to the cylindrical recession 172. A switch which can rotate around a shaft parallel to a rotation shaft of the lever 170 is provided in this recession 180.

As shown in the figure, the switch 182 has a symmetrical configuration as follows. That is, it comprises a ridge 184, left and right shoulders 186 and 188 inclining downward from the ridge 184, right and left sides 100 and 102 inclining inward and a horizontal bottom 204. Notches 206 and 208 engaged with the outer spline 174 of the operation cylinder 178 are provided at two boundaries between two sides 200 and 202 and the bottom 204.

Right and left ceilings 210 and 212 are provided at an upper end of the recession 180 for a switch. A bowl 216 is pushed downward by a spring 214 at a boundary between ceilings 210 and 212.

Figs. 18 through 21 show a first switch position of the switch 182. At this position, the left shoulder 186 of the switch 182 abuts on the ceiling 210 and the bowl 216 pushes the left side of the ridge 184 downward. Therefore, the switch 182 is prevented from rotating counterclockwise and it is held at the position shown in the figure until an operator switches the switch 182 with a strong force.

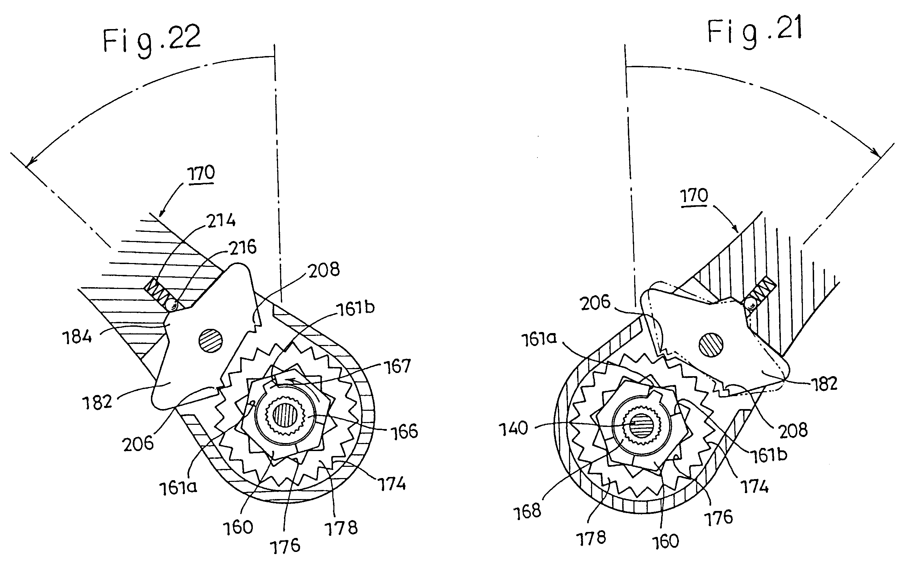

Figs. 21 and 22 show a second position of the switch 182. At this position, the switch 182 has rotated counterclockwise from the position shown in Figs. 18 through 20 and the right shoulder 188 of the switch 182 abuts on the right ceiling 212. When the switch 182 is switched from the first switch position to the second switch position, the bowl 216 has to get over the top of the ridge 184 of the switch 182. Therefore, at this time, the operator has to perform switching operation forcedly against a force of the spring 214. At the second switch position, the bowl 216 pushed the right side of the ridge 184 downward. Therefore, the switch 182 is prevented from rotating clockwise and it is held at the position shown in the figure.

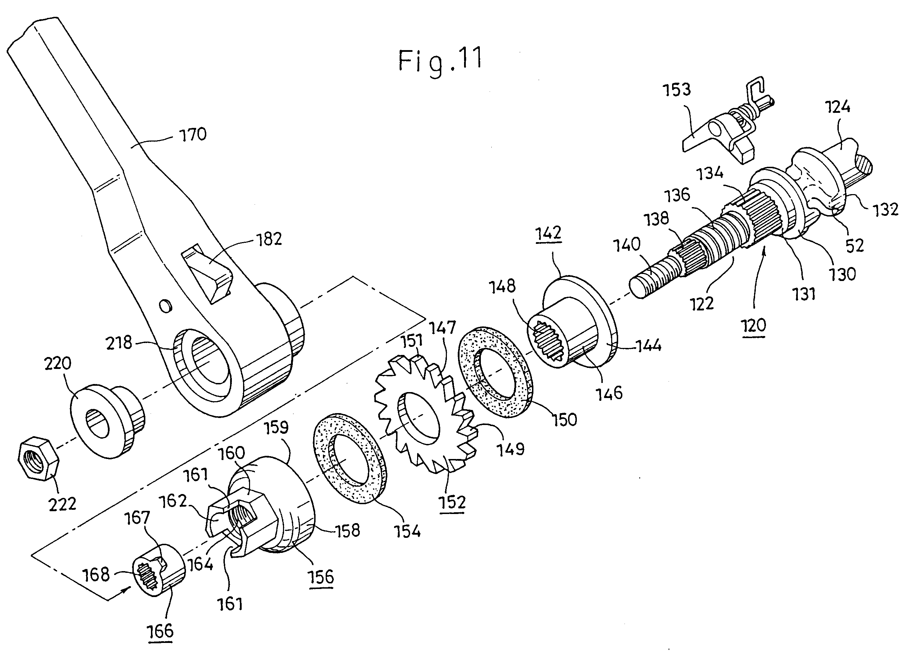

As shown in Fig. 11, an outer opening 218 at the base of the lever 170 is closed by a end plate 220. The operation shaft 120 passes through the end plate 220 and a nut 222 and a male screw 140 of an end of the operation shaft 120 are screwed together. As a result, the lever 170 is prevented from coming out of the operation shaft 120 and a state assembled with members shown in Fig. 11 is maintained.

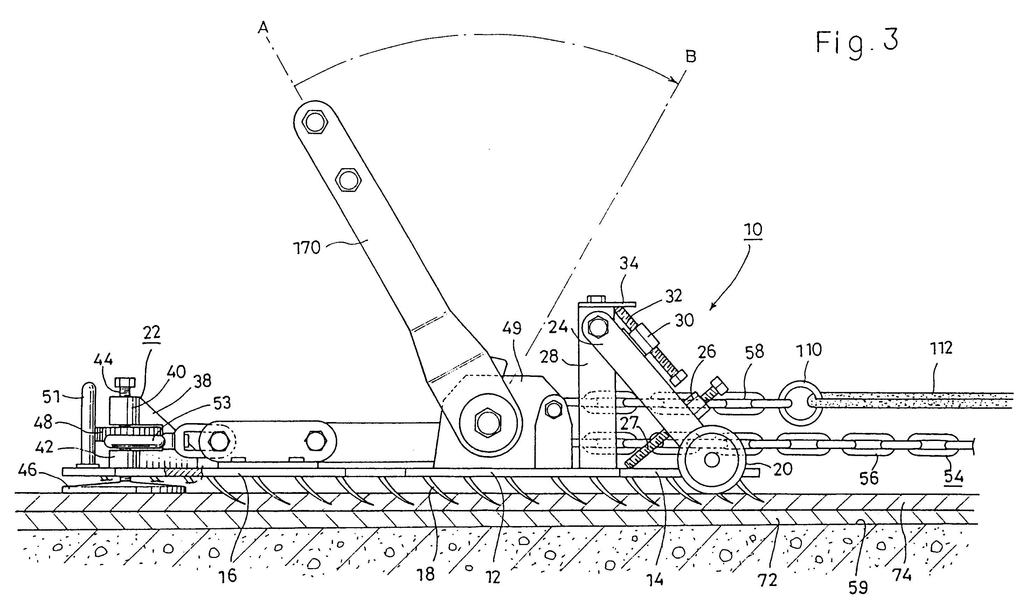

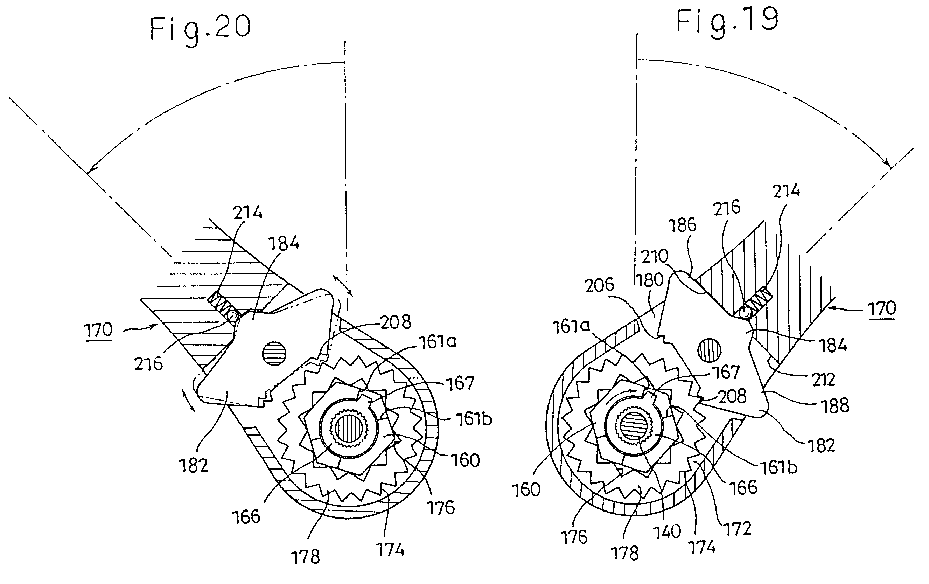

In Figs. 1 and 3, the lever 170 is at a start position (a position shown by A in Fig. 3). In this state, the switch 182 is at the first switch position shown in Figs 18 through 20. From this state, the lever 170 is rotated forward, that is, clockwise by a handle 169 provided at an end of the lever 170 to bring it to a position shown by B in Fig. 3. Two state of the lever 170 in the course of this clockwise rotation are shown in Figs 18 and 19. More specifically, Fig. 18 shows that the lever 170 almost stands straight and Fig. 19 shows that the lever 170 is at a final stage in the course of rotation, which position is shown by a dashed line B in Fig. 3. As shown in Fig. 18, the right notch 208 of the switch 182 is engaged with the outer spline 174 of the operation cylinder 178 arranged inside the lever 170. In this state, when the lever 170 is rotated clockwise, the switch 182 and the spline 174 are relatively rotated. As a result, the spline 174 pushes the notch 208 of the switch 182 engaged therewith to the left and upward and forces the switch 182 to rotate clockwise. However, since the left shoulder 186 of the switch 182 abuts on the left ceiling 210 provided inside the liver 170, the switch 182 is actually prevented from rotating clockwise. Therefore, the switch 182 and the spline 174 are not relatively rotated, with the result that the operation cylinder 178 is moved by the lever 170 through the switch 182 when the lever 170 is rotated.

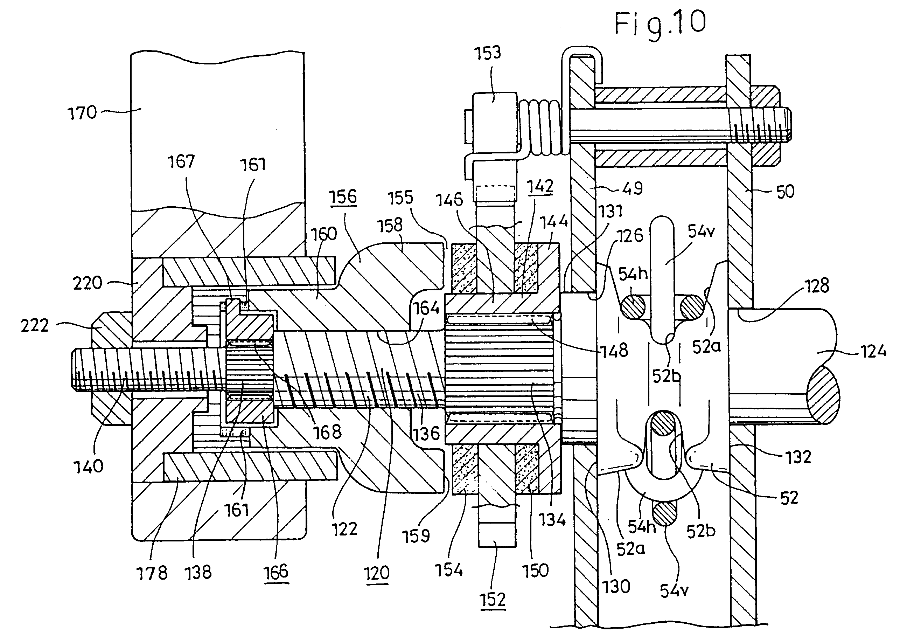

Since the cylindrical part 160 of the clutching member 156 is engaged with the inner spline 176 of the operation cylinder 178, the clutching member 156 is also rotated by rotation of the operation cylinder 178. Since the female screw 164 on the inner surface of the clutching member 156 and the male screw 136 of the operation shaft 120 are screwed together, when the clutching member 156 is rotated, the clutching member 156 is moved in the right direction in Fig. 10. As a result, the clutching member 156 moves two linings 150 and 154 and the ratchet wheel 152 to the right direction and pushed these members toward the disc 144 of the disc hub 143. As a result, the clutching member 156, two linings 150 and 154, the ratchet wheel 152 and the disc hub 144 are pressed to each other and serve as an integral part to relatively move during rotating operation. In this state, a gap 155 shown in Fig. 10 does not exist, which is called a clutching state. Meanwhile, the operation shaft 120 and the disc hub 142 can not be relatively rotated due to operation of the splines 134 and 148. Therefore, when the lever 170 is rotated clockwise, the disc hub 142 is rotated under the clutching state and then, the drum 52 provided at the operation shaft 120 is correspondingly rotated clockwise. At this time, the ratchet wheel is also rotated clockwise. The reason for this is that a pawl 153 slides on a slant face 147 of the tooth 151 of the ratchet wheel 152, so that it is allowed to rotate clockwise. A lower part 56 of the link chain 54 for drawing the apparatus 10 is drawn toward the apparatus 10 by a predetermined length by clockwise rotation of the drum 52, with the result that the apparatus 10 moves with the carpet 74 by a predetermined length to stretch the carpet 74.

Meanwhile, as shown in Fig. 18, a stopper 167 of the check washer 166 is positioned at the center of the notch 161 of the cylindrical part 160 of the clutching member 156 in a circumferential direction. In the course of clockwise rotation of the lever 170, if the lever 170 is further rotated clockwise from a state shown in Fig. 18, the stopper 167 abuts on an end surface 161a of the notch 167 on the left side in the figure. Then, as shown in Fig. 19, the stopper 167 is pushed by the end surface 161a, so that the check washer 166 is rotated with the clutching member 156. Since the spline 168 on the inner surface of the check washer 166 is engaged with the second spline 138 of the operation shaft 120, the clutching member 156 and the operation shaft 120 are rotated together through the check washer 168. More specifically, excessive compression due to the clutching member 156 to the linings 150 and 154 and the ratchet wheel 152 are prevented.

In addition, when the lever 170 is rotated clockwise as described above, the drum 52 is allowed to rotate clockwise but not allowed to rotate counterclockwise by cooperation of the ratchet wheel 152 and the pawl 153. More specifically, in the clutching state, the ratchet wheel 152 and the drum 52 is rotated together but the ratchet wheel 152 is prevented from reversely rotating because the pawl 153 is engaged with the tooth 151 of the ratchet wheel 152, with the result that the drum 52 is also prevented from reversely rotating. For the same reason, even if there is an abnormal force which draws the lower part 56 of the link chain 54 forward from the apparatus 10, the drum 52 is not reversely rotated. Furthermore, in the course of clockwise rotation of the lever 170, even if the operator stop operation and let go his hold of the lever 170, the drum 52 and the lever 170 will not reversely rotate.

The lever 170 is brought to the position of B shown in Fig. 3 by the above-described clockwise rotation and then brought to the position of A in Figs. 1 and 3 again by counterclockwise rotation of the lever. Fig. 20 shows an internal state of the lever 170 when the lever 170 is at a final position in the course of second rotation. In the course of the second rotation, as shown in Fig. 20, when the spline 174 relatively rotates with a switch 182 provided inside the lever 170, each crest of the spline 174 pushes the notch 208 of the switch 182 engaged therewith in a right and upward direction in the figure, so that the switch 182 is rotated counterclockwise and brought to the position shown by a dashed line in the figure. On the other hand, a left slant face of the ridge 184 of the switch 182 is pushed by the bowl 216 and forced to rotate clockwise. Therefore, the switch 182 moves between the positions of the solid line and the dashed line in the figure and allow the switch 182 and the spline 174 to relatively rotate. In this way, even if the lever 170 is rotated counterclockwise, the operation cylinder 178 does not rotate and then the drum 52 is also does not rotate counterclockwise. In addition, since the pawl 153 is interlocked with the ratchet wheel 152, it is possible to prevent the drum 52 and the lever 170 from rotating counterclockwise by a tension at the lower part 56 of the chain 54 when the operator let go his hold of the lever 170.

While reciprocating rotation of the lever 170 is repeated as described above, the lower part 56 of the link chain 54 is gradually drawn toward the apparatus 10 and correspondingly the apparatus advances to stretch the carpet.

After the reciprocating rotation of the lever 170 is repeated as described above, when one carpet stretching operation is completed, the chain 54 is at a state shown in Fig. 8. Therefore, in order to perform stretching operation again, it is necessary to return the chain to the state shown in Fig. 7. This is performed as follows.

As shown in Figs. 21 and 22, the switch 182 is brought to the second switch position. As shown in Fig. 21, when the lever 170 is rotated clockwise in this state, the switch 182 is not engaged with the outer spline 174 of the operation cylinder 178 for the similar reason in Fig. 20. Therefore, even if the lever 170 is rotated, the drum 52 does not rotate. On the other hand, as shown in Fig. 22, when the lever 170 is rotated counterclockwise, the switch 182 is engaged with the spline 174 for the similar reason in Fig. 19. Then, the drum 52 rotates counterclockwise corresponding to rotation of the lever 170 for a reason to be described in the following paragraph. While the above-described reciprocating rotation is repeated, the upper part 58 of the chain is drawn toward the apparatus 10 and the lower part 56 thereof is drawn out in a forward direction from the apparatus 10, so that it returns to the state shown in Fig. 7.

When the lever 170 is rotated counterclockwise under the second switch position of the switch 182, the clutching member 156 rotates counterclockwise, so that the clutching member 156 and the male screw 136 of the operation shaft 120 are screwed together, while the clutching member retreats in a left direction in Fig. 10. As a result, as shown in Fig. 10, a gap 155 is generated. More specifically, the clutch is let out. Therefore, when the lever 170 is rotated counterclockwise, the clutching member 156 can be rotated by the lever 170 even if the ratchet wheel 152 is prevented from being rotated by the pawl 153. When the clutching member 156 rotates counterclockwise, as shown in Fig. 22, the right edge 161b of the notch 161 of the clutching member 156 abuts on the stopper 167 of the check washer 166 and then the clutching member 156 and the check washer are rotated together. As a result, the operation shaft 120, which can not be relatively rotated with the check washer 166, can be also rotated and then the drum 52 is rotated counterclockwise. In addition, when the right edge 161b of the notch 161 of the clutching member 156 abuts on the stopper 167 of the check washer 166, both are rotated together, so that the clutching member 156 is reversely rotated with no limitation and the clutching member 156 is prevented from being spaced apart too much from the linings 150 and 154 and the ratchet wheel 152.

### Variation of Method for Stretching Carpet

As a method for spreading a carpet using the apparatus 10 of the present invention, several kinds of methods are considered other than that shown in Fig. 6.

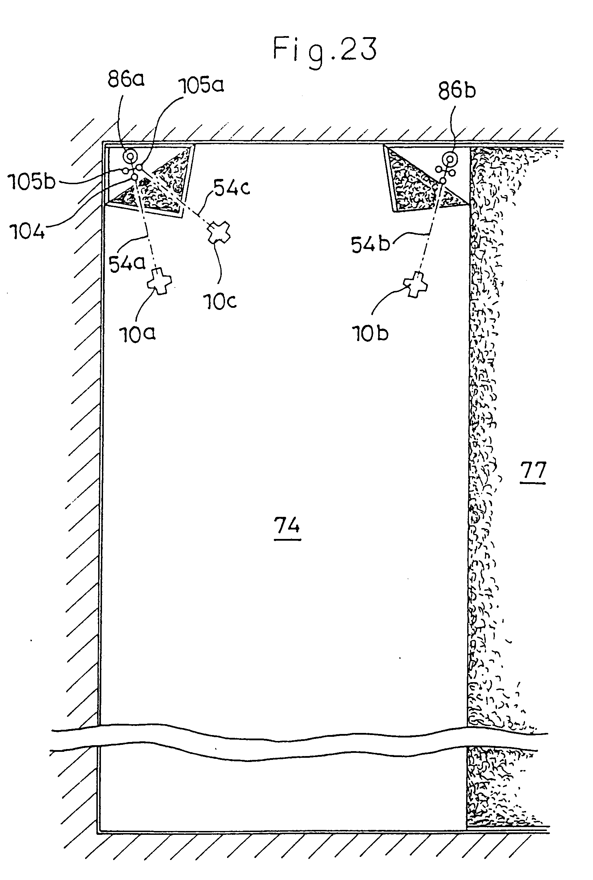

In Fig. 23, a third apparatus 10c is used together with two apparatuses 10a and 10b which are the same as those in Fig. 6. This apparatus 10c is arranged on the right side of the left apparatus 10a and its chain 54c is connected an engaging member 105a of the securing member 86a on the left shoulder of the carpet 74. When there is slack on the carpet between a pair of right and left apparatuses 10a and 10b, that part of the carpet is drawn forward by the third apparatus 10c to remove the slack.

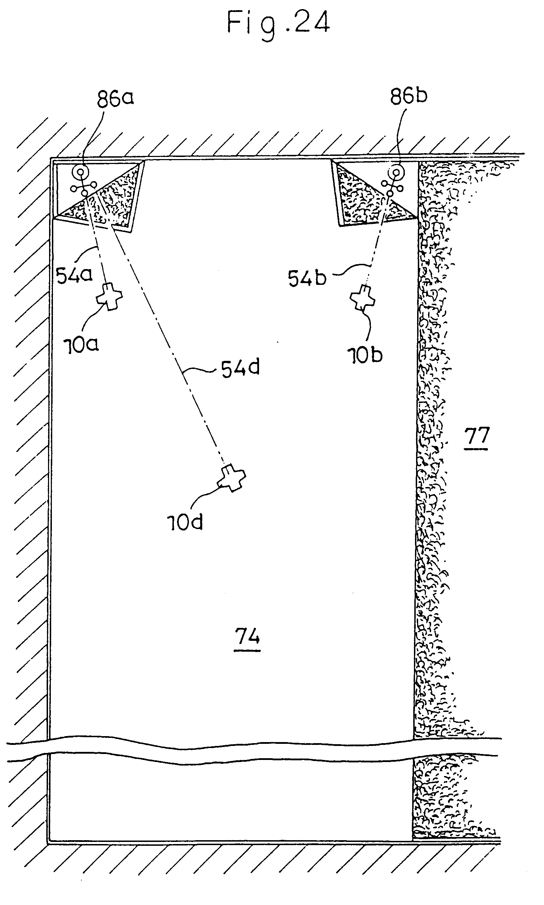

In Fig. 24, a third apparatus 10d is also used. In this case, the third apparatus is arranged behind the left apparatus 10a at a distance. When slack is found on the starting side of the carpet after the ending side 78 of the carpet 74 was already stretched, the slack can be removed by this method.

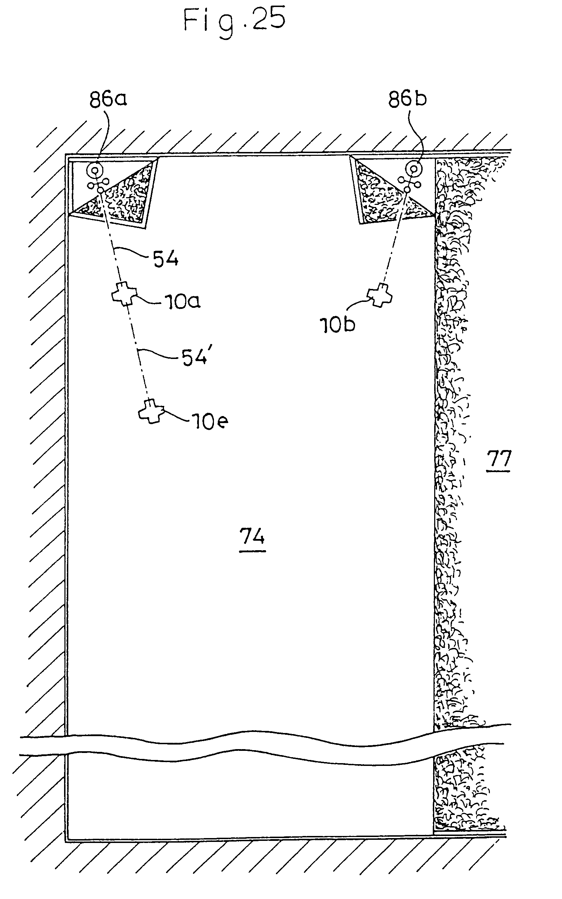

In addition, in Fig. 25, a third apparatus 10e is arranged behind the left apparatus 10a of the pair of right and left apparatuses 10a and 10b which are the same as those in Fig. 6 and the apparatus 10a is connected to the apparatus 10e by another chain 54′. At this time, the end of the chain 54′ is fixed to the engaging ring 53 (shown in Fig. 1) provided at the rear of the forward apparatus 10a. Then, it is possible to uniformly stretch a part of the carpet ahead of the third apparatus 10e in the forward direction by this method.

In addition, when a pattern on the carpet 74 does not match a pattern on another carpet 74′ put on the right side, that part of the carpet 74 is moved forward by this method to match the other pattern. More specifically, when patterns a1, a2, a3, a5, a6 and a7 are matched but only a pattern a4 is not matched between the starting side 76 and the ending side 78 of the carpets 74 and 74′, the third apparatus 10f is set near the pattern a4 of the carpet 74 and then drawn forward in such a manner that only this part is moved in a forward direction and the pattern a4 matches other one. In this case also, as shown in Fig. 25, the apparatuses 10b and 10f may be connected to each other.

Although the present invention has been described and illustrated in detail, it is clearly understood that the same is by way of illustration and example only and is not to be taken by way of limitation, the scope of the present invention being limited only by the terms of the appended claims.

## Claims

1. A carpet stretching apparatus (10) comprising:
a base (12);
a plurality of pins (18) projecting downward from a lower surface of said base (12);
a drum (52) rotatably attached to and above said base (12) and having holding means (52a, 52b) for a line member for traction on a peripheral surface;
a line member for traction (54) having first and second ends (106, 110) and a middle part, in which said first end (106) is fixed to an ending side (78) of a carpet (74) put on a floor (59) and said middle part is rolled round the peripheral surface of said drum (52) and held by said holding means (52a, 52b);
a lever (170) for operation for rotating said drum (52) which is reciprocally rotated in a first direction to draw said first end (106) of said line member for traction (54) toward the apparatus (10);
reversal preventing means (152, 153) for preventing said drum (52) from rotating opposite to said first direction ;
characterised in that said second end (110) of said line member for traction (54) extends from said peripheral surface of said drum (52) and said lever (170) is for operation in a second direction opposite to said first direction; and said apparatus further comprises
switching means (182) for switching transmission of rotation from said lever (170) to said drum (52), in which, in a first switch position, rotation of said lever (170) in said first direction is transmitted to said drum (52) but rotation in said second direction is not transmitted to said drum (52) and, in a second switch position, rotation of said lever (170) in said first direction is not transmitted to said drum (52) but the rotation in said second direction is transmitted to said drum (52); and said reversal preventing means (152, 153) prevents said drum (52) from rotating in said second direction by tension at a part (56) between said first end (106) of said line member for traction (54) and said drum (52) when said rotation of said lever (170) in said second direction is not transmitted to said drum (52) at said first switch position of said switching means (182);
wherein said apparatus (10) is put on a carpet with its starting side fixed to a floor (59) on which the carpet is to be spread, said pins (18) are stuck into the carpet to fix the apparatus to the carpet, said first end (106) of said line member for traction is fixed to the carpet on an ending side (78), said switching means (182) of said lever (170) for operation is brought to its first switch position, said lever (170) is reciprocally rotated to draw said first end (106) of said line member for traction (54) toward the apparatus (10), whereby the apparatus (10) is drawn toward the ending side (78) of said carpet (74) to stretch the carpet (74),
thereafter, said switching means (182) of said lever (170) for operation is brought to its second switch position and said lever (170) is reciprocally rotated to draw said first end (106) of said line member for traction (54) out in the forward direction from the apparatus (10).

2. A carpet stretching apparatus (10) in accordance with claim 1, wherein said line member for traction (54) is a link chain and said holding means (52a, 52b) are recessions having a configuration capable of accepting adjacent chain links (54h, 54v) crossed at the right angles and provided on a peripheral surface of the drum (52).

3. A carpet stretching apparatus (10) according to claim 1 or 2, further comprising a securing member (86) for a free end of said line member for traction used for stretching a carpet comprising:
a substrate (88) having vertical through holes (90, 92) into which pin means (91) are inserted to fix the carpet;
an arm (96, 100) provided in a plain surface parallel with the substrate (88) so as to be able to rotate around a point on the substrate (88); and
an engaged member (104) provided at an end of said arm (96, 100);
wherein the securing member (86) is put at an end on a floor (59) on which the carpet (74) is put down with an ending side (78) of the carpet (74) , said pin means (91) are inserted into said through hole (90, 92) and a hole (94) formed or to be formed in the floor (59) to fix this securing member (86) to the floor (59), and a free end (106) of the line member for traction (54) extending from said carpet stretching apparatus (10) fixed to the carpet (74) is engaged with said engaged member (104).

4. A carpet stretching apparatus (10) in accordance with claim 3, wherein said plurality of through holes (90, 92) are dispersed on the substrate (88).

5. A carpet stretching apparatus (10) in accordance with claim 4, wherein said plurality of through holes (90, 92) have at least two different diameters.

6. A carpet stretching apparatus (10) in accordance with claim 3, wherein said arm (96, 100) comprises a first arm part (96) capable of rotating around a point on said substrate (88) in a plain surface parallel with the substrate (88) and a second arm part (100) capable of rotating around a point on a free end (99) of the first arm part (96) and said engaged member (104) is provided at an end of the second arm part (100).

7. A carpet stretching apparatus (10) in accordance with any one of claims 3 through 6, wherein other engaged members (105a, 105b) are additionally provided on one side or both sides of said arm (105a, 105b).

8. A method for stretching a carpet comprising steps of:
I fixing first and second gripper means (66, 68) to places, which correspond to the starting side (76) and the ending side (78) of the carpet, on a floor (59) on which the carpet (74) is put, respectively;
II fixing the starting side (76) of the carpet (74) to the first gripper means (66) and then bringing the ending side (78) of the carpet near the second gripper means (68) after the carpet is put down; characterised in
III putting two carpet stretching apparatuses (10) according to claim 1 having many pins (18) projecting downward from a lower surface of a base (12) and means (52) for drawing a free end (106) of a line member for traction (54) above the base (12) on two places spaced apart in a width direction of the carpet to fix them to the carpet (74) through the pins (18);
IV fixing two securing members (86, 86) as defined in claim 3 to two places, which are spaced larger than a distance between two carpet stretching apparatuses (10) in the step III in a width direction of the carpet (74), on the floor (59) just before the second gripper means (68), before or after said steps II and III, during these steps or at the same time of both or one of these steps;
V attaching the free end (106) of the line member for traction (54) of the carpet stretching apparatus (10) to the securing member (86); and
VI drawing the free end (106) of the line member for traction (54) toward the carpet stretching apparatus (10) by operating the carpet stretching apparatus (10).

9. A method for stretching a carpet in accordance with claim 8, wherein at least one other similar carpet stretching apparatus (10c) is arranged on the side of at least one (10a) of said two carpet stretching apparatuses (10a, 10b) and an end of its line member for traction (54c) is engaged with one (86a) of said two securing members (86a, 86b).

10. A method for stretching a carpet in accordance with claim 8, wherein at least one other similar carpet stretching apparatus (10d) is arranged in the rear of said two carpet stretching apparatuses (10a, 10b), that is, on a starting side (76) of the carpet, and a free end of its line member for traction (54d) is engaged with said securing member (86a).

11. A method for stretching a carpet in accordance with claim 8, wherein at least one other similar carpet stretching apparatus (10e) is arranged in the rear of said two carpet stretching apparatuses (10a, 10b), that is, on a starting side (76) of the carpet, and this carpet stretching apparatus (10e) is connected to at least one (10a) of said first carpet stretching apparatus (10a, 10b) by another line member for traction (54').

12. A method for stretching a carpet in accordance with claim 8, wherein said carpet (74) is put adjacent to another carpet (74') and a third carpet stretching apparatus (10f) is arranged on said carpet (74) near said another carpet (74'), in which patterns of both carpets (74, 74') do not match, and drawn forward to adjust said patterns.

## Patentansprüche

1. Teppichspannvorrichtung (10) umfassend:
eine Grundplatte (12);
mehrere Stifte (18), die sich von einer unteren Seite der Grundplatte (12) nach unten erstrecken;
eine Trommel (52), die drehbar an und oberhalb der Grundplatte (12) angebracht ist und Halteeinrichtungen (52a, 52b) für ein Seil zum Ziehen auf einer Umfangsfläche aufweist;
ein Zugseil (54), das ein erstes und zweites Ende (106, 110) und ein Mittelteil aufweist, in dem das erste Ende (106) an einem Randbereich (78) eines auf einen Boden (59) gelegten Teppichs (74) befestigt ist, und das Mittelteil um die Umfangsfläche der Trommel (52) gerollt ist und von den Halteeinrichtungen (52a, 52b) gehalten wird;
einen Betätigungshebel (170) zum Drehen der Trommel (52), die wechselweise in eine erste Richtung gedreht wird, um das erste Ende (106) des Zugseiles (54) in Richtung der Vorrichtung (10) zu ziehen;
Umkehrverhinderungsmittel (152, 153) zur Verhinderung, daß die Trommel (52) entgegengesetzt zur ersten Richtung gedreht wird;
dadurch gekennzeichnet, daß das zweite Ende (110) des Zugseiles (54) sich von der Umfangsfläche der Trommel (52) erstreckt und der Hebel (170) zur Betätigung in einer zweiten Richtung dient, die entgegengesetzt zur ersten Richtung ist; und die Vorrichtung ferner umfaßt:
eine Schalteinrichtung (182) zum Schalten einer Drehübertragung vom Hebel (170) auf die Trommel (52), wobei in einer ersten Schaltposition die Drehung des Hebels (170) in der ersten Richtung auf die Trommel (52) übertragen wird, jedoch die Drehung in der zweiten Richtung nicht auf die Trommel (52) übertragen wird, und in einer zweiten Schaltposition die Drehung des Hebels (170) in die erste Richtung nicht auf die Trommel (52) übertragen wird, jedoch die Drehung in der zweiten Richtung auf die Trommel (52) übertragen wird; und die Umkehrverhinderungsmittel (152, 153) eine Drehung der Trommel (52) in der zweiten Richtung durch Spannung an einem Teil (56) zwischen dem ersten Ende (106) des Zugseiles (54) und der Trommel (52) verhindern, wenn die Drehung des Hebels (170) in die zweite Richtung nicht auf die Trommel (52) in der ersten Schaltposition der Schalteinrichtung (182) übertragen wird;
wobei die Vorrichtung (10) auf einen Teppich gebracht wird, während ihre Anfangsseite am Boden (59), auf dem der Teppich ausgebreitet werden soll, befestigt ist, wobei die Stifte (18) in den Teppich gesteckt werden, um die Vorrichtung am Teppich zu befestigen, das erste Ende (106) des Zugseiles an einem Randbereich (78) des Teppichs befestigt wird, die Schalteinrichtung (182) des Betätigungshebels (170) in die erste Schaltposition gebracht wird, der Hebel (170) wechselweise gedreht wird, um das erste Ende (106) des Zugseiles (54) in Richtung der Vorrichtung (10) zu ziehen, wobei die Vorrichtung (10) in Richtung des Randbereichs (78) des Teppichs (74) gezogen wird, um den Teppich (74) zu spannen, und daraufhin die Schalteinrichtung (182) des Betätigungshebels (170) in die zweite Schaltposition gebracht wird und der Hebel (170) wechselweise gedreht wird, um das erste Ende (106) des Zugseiles (54) in der Vorderrichtung des Apparates (10) auszuziehen.

2. Teppichspannvorrichtung (10) nach Anspruch 1, dadurch gekennzeichnet, daß das Zugseil (54) eine Gliederkette ist und die Halteeinrichtungen (52a, 52b) Vertiefungen mit einer Konfiguration sind, die in der Lage sind, nebeneinanderliegende rechtwinklig sich kreuzende Kettenglieder (54h, 54v) aufzunehmen und auf der Umfangsfläche der Trommel (52) angeordnet sind.

3. Teppichspannvorrichtung (10) nach Anspruch 1 oder 2, ferner umfassend ein Halteteil (86) für ein freies Ende des zum Spannen des Teppichs verwendeten Zugseiles, umfassend:
ein Bauteil (88) mit vertikalen Durchgangslöchern (90, 92), in die Stiftelemente (91) eingeführt werden, um den Teppich zu befestigen;
einen Arm (96, 100), der in einer ebenen Fläche angeordnet ist, welche parallel zum Bauteil (88) verläuft, um in der Lage zu sein, um einen Punkt auf dem Bauteil (88) zu rotieren; und
ein Befestigungsteil (104), das an einem Ende des Armes (96, 100) angeordnet ist;
wobei dar Halteteil (86) an einem Ende auf den Boden (59) gelegt wird, auf den der Teppich (74) mit einem Randbereich (78) gebracht wird, wobei die Stiftelemente (91) durch die Durchgangslöcher (90, 92) und ein Loch (94), das im Boden (59) gebildet ist oder gebildet wird, eingesteckt werden, um das Halteteil (86) am Boden (59) zu fixieren, und ein freies Ende (106) des Zugseiles (54), das sich von der am Teppich (74) fixierten Teppichspannvorrichtung (10) erstreckt, am Befestigungsteil (104) befestigt ist.

4. Teppichspannvorrichtung (10) nach Anspruch 3, wobei die mehreren Durchgangsbohrungen (90, 92) auf dem Bauteil (88) verteilt sind.

5. Teppichspannvorrichtung (10) nach Anspruch 4, wobei die mehreren Durchgangsbohrungen (90, 92) mindestens zwei verschiedene Durchmesser aufweisen.

6. Teppichspannvorrichtung (10) nach Anspruch 3, wobei der Arm (96, 100) ein erstes Armteil (96), das in der Lage ist, um einen Punkt auf dem Bauteil (88) zu rotieren, der in einer ebenen Fläche parallel zum Bauteil (88) liegt, und ein zweites Armteil (100) umfaßt, das in der Lage ist, um einen Punkt am freien Ende (99) des ersten Armteils (96) zu rotieren, und das Befestigungsteil (104) an einem Ende des zweiten Armteils (100) angeordnet ist.

7. Teppichspannvorrichtung (10) nach einem der Ansprüche 3 bis 6, wobei weitere Befestigungsteile (105a, 105b) zusätzlich auf einer Seite oder beiden Seiten des Armes (105a, 105b) angeordnet sind.

8. Verfahren zum Spannen eines Teppichs, umfassend die folgenden Schritte:
I. Fixieren von ersten und zweiten Greifeinrichtungen (66, 68) jeweils an Orten, die der Anfangsseite (76) und der Endseite (78) des Teppichs entsprechen, auf einem Boden (59), auf den der Teppich (74) gelegt wird;
II. Fixieren der Anfangsseite (75) des Teppichs (74) an der ersten Greifeinrichtung (66) und anschließendes Platzieren der Endseite (78) des Teppichs nahe der zweiten Greifeinrichtung (68), nachdem der Teppich abgelegt worden ist; gekennzeichnet durch
III. Anordnen von zwei Teppichspannvorrichtungen (10) gemäß Anspruch 1, welche mehrere von einer Unterseite einer Grundplatte (12) nach unten ragende Stifte (18) und Einrichtungen (52) zum Einziehen eines freien Endes (106) eines Zugseils (54) oberhalb der Grundplatte (12) aufweist, auf zwei voneinander entfernten Plätzen in einer Querrichtung des Teppichs, um diese mittels der Stifte (18) am Teppich zu fixieren;
IV. Fixieren von zwei Halteteilen (86, 86) gemäß Anspruch 3 an zwei Orten, die voneinander weiter entfernt sind als die zwei Teppichspannvorrichtungen (10) gemäß Schritt III in einer Querrichtung des Teppichs (74), auf dem Boden (59) direkt vor der zweiten Greifeinrichtung (68), vor oder nach den Schritten II und III, während dieser Schritte oder gleichzeitig mit beiden oder einem dieser Schritte;
V. Befestigen des freien Endes (106) des Zugseiles (54) der Teppichspannvorrichtung (10) am Halteteil (86); und
VI. Einziehen des freien Endes (106) des Zugseiles (54) in Richtung der Teppichspannvorrichtung (10) durch Betätigung der Teppichspannvorrichtung (10).

9. Verfahren zum Spannen eines Teppichs gemäß Anspruch 8, wobei zumindest eine weitere ähnliche Teppichspannvorrichtung (10c) auf der Seite zumindest einer (10a) der beiden Teppichspannvorrichtungen (10a, 10b) angeordnet ist, und ein Ende von deren Zugseil (54c) mit einem (86a) der beiden Befestigungsteile (86a, 86b) verbunden ist.

10. Verfahren zum Spannen eines Teppichs gemäß Anspruch 8, wobei zumindest eine weitere ähnliche Teppichspannvorrichtung (10d) hinter den beiden Teppichspannvorrichtungen (10a, 10b) angeordnet ist, nämlich auf einer Anfangsseite (76) des Teppichs, und ein freies Ende von deren Zugseil (54d) mit dem Befestigungsteil (86a) verbunden ist.

11. Verfahren zum Spannen eines Teppichs gemäß Anspruch 8, wobei zumindest eine weitere ähnliche Teppichspannvorrichtung (10e) hinter den beiden Teppichspannvorrichtungen (10a, 10b) angeordnet ist, nämlich auf einer Anfangsseite (76) des Teppichs, und diese Teppichspannvorrichtung (10e) mit zumindest einer (10a) der ersten Teppichspannvorrichtung (10a, 10b) mittels eines weiteren Zugseils (54') verbunden ist.

12. Verfahren zum Spannen eines Teppichs gemäß Anspruch 8, wobei der Teppich (74) neben einen weiteren Teppich (74') gelegt wird und eine dritte Teppichspannvorrichtung (10f) auf dem Teppich (74) nahe dem anderen Teppich (74') angeordnet ist, wobei sich die Muster der beiden Teppiche (74, 74') nicht decken, und dieser zur Anpassung der Muster nach vorne gezogen wird.

## Revendications

1. Appareil (10) pour tendre une moquette, comprenant:
- une base (12);
- une pluralité d'épingles (18) se projetant vers le bas depuis la surface inférieure de ladite base (12);
- un tambour (52) fixé, de façon à pouvoir tourner, à et au-dessus de ladite base (12) et ayant des moyens de maintien (52a, 52b) pour un organe de ligne pour la traction sur une surface périphérique;
- un organe de ligne (54) pour la traction, ayant une première et une seconde extrémités (106, 110) et une partie médiane, ladite première extrémité (106) étant fixée à un côté d'extrémité (78) d'une moquette (74) posée sur un plancher (59) et ladite partie médiane étant enroulée autour de la surface périphérique dudit tambour (52) et maintenue par lesdits moyens de maintien (52a, 52b);
- un levier (170) pour actionner la rotation dudit tambour (52), qui est alternativement mis en rotation dans un premier sens pour tirer ladite première extrémité (106) dudit organe de ligne (54) pour la traction vers l'appareil (10);
- des moyens de prévention (152, 153) de renversement pour empêcher ledit tambour (52) de tourner dans le sens opposé audit premier sens;
- caractérisé en ce que ladite seconde extrémité (110) dudit organe de ligne (54) pour la traction s'étend depuis ladite surface périphérique dudit tambour (52), et en ce que ledit levier (170) est prévu pour fonctionner dans un second sens opposé audit premier sens; ledit appareil comprenant de plus:
- un moyen de commutation (182) pour commuter la transmission de la rotation depuis ledit levier (170) vers ledit tambour (52), dans lequel, dans une première position de commutation, la rotation dudit levier (170) dans ledit premier sens est transmise audit tambour (52), mais la rotation dans ledit second sens n'est pas transmise audit tambour (52) et, dans une seconde position de commutation, la rotation dudit levier (170) dans ledit premier sens n'est pas transmise audit tambour (52), mais la rotation dans ledit second sens est transmise audit tambour (52); et lesdits moyens de prévention (152, 153) de renversement empêchent ledit tambour (52) de tourner dans ledit second sens par une tension en une partie (56) entre ladite première extrémité (106) dudit organe de ligne (54) pour la traction et ledit tambour (52) quand ladite rotation dudit levier (170) dans ladite seconde direction n'est pas transmise audit tambour (52) dans ladite première position de commutation dudit moyen de commutation (182);
- dans lequel ledit appareil (10) est posé sur une moquette, son côté de départ étant fixé sur un plancher (59) sur lequel la moquette doit être tendue, lesdites épingles (18) s'enfoncent dans la moquette pour fixer l'appareil à la moquette, ladite première extrémité (106) dudit organe de ligne pour la traction est fixée à la moquette sur un côté d'extrémité (78), ledit moyen de commutation (182) dudit levier (170) pour son fonctionnement est amené dans sa première position de commutation, ledit levier (170) est tourné alternativement pour tirer ladite première extrémité (106) dudit organe de ligne (54) pour la traction vers l'appareil (10), grâce à quoi l'appareil (10) est tiré vers le côté d'extrémité (78) de ladite moquette (74) pour tendre la moquette (74),
et après, ledit moyen de commutation (182) dudit levier (170) pour son fonctionnement est amené dans sa seconde position de commutation et ledit levier (170) est tourné alternativement pour tirer ladite première extrémité (106) dudit organe de ligne (54) pour la traction vers l'extérieur dans la direction avant depuis l'appareil (10).

2. Appareil (10) pour tendre une moquette selon la revendication 1, dans lequel ledit organe de ligne (54) pour la traction est une chaîne à anneaux, et les moyens de maintien (52a, 52b) sont des évidements ayant une configuration apte à recevoir des maillons adjacents de chaînes (54h, 54v) croisés à angles droits et prévus sur la surface périphérique du tambour (52).

3. Appareil (10) pour tendre une moquette selon la revendication 1 ou 2, comprenant de plus une pièce (86) de fixation pour une extrémité libre dudit organe de ligne pour la traction, utilisée pour tendre une moquette, comprenant:
- un substrat (88) ayant des trous verticaux traversants (90, 92) dans lesquels des moyens à goupilles (91) sont insérés pour fixer la moquette;
- un bras (96, 100) prévu dans une surface plane parallèle au substrat, de façon à pouvoir tourner autour d'un point sur le substrat (88); et
- une pièce engagée (104) prévue à une extrémité dudit bras (96, 100);
- dans lequel la pièce (86) de fixation est posée à une extrémité d'un plancher (59) sur lequel la moquette (74) est posée avec un côté d'extrémité (78) de la moquette (74), ledit moyen à goupilles (91) étant insérés dans ledit trou traversant (90, 92) et dans un trou (94) formé ou à former dans le plancher (59) pour fixer cette pièce (86) de fixation au plancher (59), et une extrémité libre (106) de l'organe de ligne (54) pour la traction s'étendant depuis ledit appareil (10) pour tendre une moquette, fixé à la moquette (74), est engagée avec ladite pièce engagée (104).

4. Appareil (10) pour tendre une moquette selon la revendication 3, dans lequel ladite pluralité de trous traversants (90, 92) sont répartis sur le substrat (88).

5. Appareil (10) pour tendre une moquette selon la revendication 4, dans lequel ladite pluralité de trous traversants (90, 92) ont au moins deux diamètres différents.

6. Appareil (10) pour tendre une moquette selon la revendication 3, dans lequel ledit bras (96, 100) comprend une première partie (96) de bras capable de tourner autour d'un point sur ledit substrat (88) dans une surface plane parallèle au substrat (88), et une seconde partie (100) de bras capable de tourner autour d'un point sur une extrémité libre (99) de la première partie (96) de bras, et ladite pièce engagée (104) est prévue à une extrémité de la seconde partie (100) de bras.

7. Appareil (10) pour tendre une moquette selon l'une quelconque des revendications 3 à 6, dans lequel d'autres pièces engagées (105a, 105b) sont en outre prévues sur un côté ou les deux côtés dudit bras (105a, 105b).

8. Procédé pour tendre une moquette, comprenant les étapes consistant à:
- I: fixer des premier et second moyens (66, 68) de pinces en des endroits qui correspondent respectivement au côté (76) de départ et au côté final (78) de la moquette, sur un plancher (59) sur lequel la moquette est posée;
- II: fixer le côté (76) de départ de la moquette (74) au premier moyen (66) de pince, et ensuite amener le côté final (78) de la moquette près du second moyen (68) de pince, la moquette ayant été mise par terre; caractérisé par le fait de:
- III: mettre deux appareils (10) pour tendre une moquette selon la revendication 1, ayant plusieurs épingles (18) se projetant vers le bas depuis la surface inférieure d'une base (12), et un moyen (52) pour tirer une extrémité libre (106) d'un organe de ligne (54) pour la traction au-dessus de la base (12) en deux endroits espacés l'un de l'autre dans la direction de la largeur de la moquette, pour les fixer à la moquette par les épingles (18);
- IV: fixer deux pièces de fixation (86, 86), telles qu'elles sont définies dans la revendication 3, en deux endroits qui sont espacés davantage que la distance entre deux appareils (10) pour tendre une moquette dans l'étape III, dans une direction en largeur de la moquette (74) sur le plancher (59) juste avant le second moyen de pince (68), avant ou après lesdites étapes II et III, pendant ces étapes ou en même temps que ces deux étapes ou que l'une d'entre elles;
- V: fixer à la pièce de fixation (86) l'extrémité libre (106) de l'organe de ligne (54) pour la traction de l'appareil (10) pour tendre une moquette; et
- VI: tirer l'extrémité libre (106) de l'organe de ligne (54) pour la traction vers l'appareil (10) pour tendre une moquette, en actionnant l'appareil (10) pour tendre la moquette.

9. Procédé pour tendre une moquette selon la revendication 8, dans lequel au moins un autre appareil similaire (10c) pour tendre une moquette est disposé sur le côté d'au moins un (10a) desdits deux appareils (10a, 10b) pour tendre une moquette, et une extrémité de son organe de ligne (54c) pour la traction est engagée avec l'une (86a) desdites deux pièces de fixation (86a, 86b).

10. Procédé pour tendre une moquette selon la revendication 8, dans lequel au moins un autre appareil similaire (10d) pour tendre une moquette est disposé à l'arrière desdits deux appareils (10a, 10b) pour tendre une moquette, c'est-à-dire sur un côté (76) de départ de la moquette, et une extrémité libre de son organe de ligne (54d) pour la traction est engagée avec ladite pièce de fixation (86a).

11. Procédé pour tendre une moquette selon la revendication 8, dans lequel au moins un autre appareil similaire (10e) pour tendre une moquette est disposé à l'arrière desdits deux appareils (10a, 10b) pour tendre une moquette, c'est-à-dire sur un côté (76) de départ de la moquette, et cet appareil (10e) pour tendre une moquette est connecté à au moins un (10a) desdits premiers appareils (10a, 10b) pour tendre une moquette par un autre organe de ligne (54') pour la traction.

12. Procédé pour tendre une moquette selon la revendication 8, dans lequel ladite moquette (74) est posée adjacente à une autre moquette (74'), et un troisième appareil (10f) pour tendre une moquette est disposé sur ladite moquette (74) à côté de ladite autre moquette (74'), dans lequel les motifs des deux moquettes (74, 74') ne sont pas assortis et sont tirés en avant pour ajuster lesdits motifs.
